# EUROPEAN PATENT APPLICATION

(11) **EP 4 844 849 A1**
(43) Date of publication of application: **25.11.2026**
(21) Application number: 24918637.0
(22) Date of filing: 24.10.2024
(51) Int. Cl.: H01M 8/18, H01M 8/02, H01M 8/0273

(54) **FRAME BODY, CELL FRAME, BATTERY CELL, CELL STACK, AND REDOX FLOW BATTERY SYSTEM**

(30) Priority: 19.01.2024 JP 2024006884
(71) Applicant: Sumitomo Electric Industries, Ltd., Osaka-shi, Osaka 541-0041 (JP)
(72) Inventor: ITO, Kenichi, Osaka-shi, Osaka 541-0041 (JP)
(74) Representative: Müller-Boré & Partner Patentanwälte PartG mbB
(86) International application number: PCT/JP2024/037957
(87) International publication number: WO 2025/154350

(57) **Abstract**

A frame body according to the present disclosure is used in a cell frame of a battery cell. The frame body according to the present disclosure comprises a first surface, a second surface that is on the opposite side from the first surface, an outer peripheral surface, and an inner peripheral surface. The outer peripheral surface is provided with a first outer peripheral surface that is connected to the first surface by a first corner portion, a second outer peripheral surface that is connected to the second surface by a second corner portion, and a connection surface that connects the first outer peripheral surface and the second outer peripheral surface. The connection surface has a first connection surface that is connected to the first outer peripheral surface. The interior angle formed by the first connection surface and the first outer peripheral surface is less than 180°.

## Description

### TECHNICAL FIELD

The present disclosure relates to a frame body, a cell frame, a battery cell, a cell stack, and a redox flow battery system.

The present application claims priority based on Japanese Patent Application No. 2024-006884 filed on January 19, 2024, and the entire contents of the Japanese patent application are incorporated herein by reference.

### BACKGROUND ART

PTL 1 discloses a frame body used in a redox flow battery system. The redox flow battery system includes a battery cell, and in a cell frame of the battery cell, the frame body supports an outer periphery of a bipolar plate. The redox flow battery system includes a layered body in which a cell frame, a positive electrode, a membrane, a negative electrode, and another cell frame are sequentially stacked.

### CITATION LIST

### PATENT LITERATURE

PTL 1: International Publication No. 2018/066094

### SUMMARY OF INVENTION

A frame body according to the present disclosure is a plate-like frame body used in a cell frame of a battery cell. The frame body according to the present disclosure includes a first surface, a second surface, the second surface being a surface opposite to the first surface, an outer peripheral surface, and an inner peripheral surface. The outer peripheral surface includes a first outer peripheral surface continuous with the first surface via a first corner portion, a second outer peripheral surface continuous with the second surface via a second corner portion, and a connecting surface connecting the first outer peripheral surface and the second outer peripheral surface. The connecting surface has a first connecting surface continuous with the first outer peripheral surface. An interior angle formed by the first connecting surface and the first outer peripheral surface is less than 180°.

### BRIEF DESCRIPTION OF DRAWINGS

[FIG. 1A] FIG. 1A is a plan view of a cell frame according to an embodiment.
[FIG. 1B] FIG. 1B is a schematic plan view of a frame body according to an embodiment.
[FIG. 1C] FIG. 1C is a sectional view taken along line I-I in FIG. 1B.
[FIG. 2] FIG. 2 is a sectional view taken along line II-II in FIG. 1A.
[FIG. 3] FIG. 3 is a partial enlarged sectional view of an outer peripheral surface of a frame body illustrated in FIG. 2.
[FIG. 4] FIG. 4 is a sectional view illustrating the vicinity of an outer peripheral surface of a frame body according to Modification 1.
[FIG. 5] FIG. 5 is a sectional view illustrating the vicinity of an outer peripheral surface of a frame body according to Modification 2.
[FIG. 6] FIG. 6 is a sectional view illustrating a part of a cell frame according to Modification 3.
[FIG. 7] FIG. 7 is a sectional view illustrating a part of a frame body according to Modification 4.
[FIG. 8] FIG. 8 is a schematic configuration view of a redox flow battery system according to an embodiment.
[FIG. 9] FIG. 9 is a schematic configuration view of a cell stack according to an embodiment.

### DETAILED DESCRIPTION

It is desirable to improve the ease of assembly of the cell frame and the ease of assembly of the layered body.

An object of the present disclosure is to provide a frame body that facilitates assembly of components of a redox flow battery system.

The frame body according to the present disclosure facilitates assembly of components of a redox flow battery system.

First, embodiments of the present disclosure will be listed and described.

(1) A frame body according to the present disclosure is a frame body used in a cell frame of a battery cell. The frame body according to the present disclosure includes a first surface, a second surface, the second surface being a surface opposite to the first surface, an outer peripheral surface, and an inner peripheral surface. The outer peripheral surface includes a first outer peripheral surface continuous with the first surface via a first corner portion, a second outer peripheral surface continuous with the second surface via a second corner portion, and a connecting surface connecting the first outer peripheral surface and the second outer peripheral surface. The connecting surface has a first connecting surface continuous with the first outer peripheral surface. An interior angle formed by the first connecting surface and the first outer peripheral surface is less than 180°.

The first connecting surface provided on the outer peripheral surface of the frame body has an anti-slip function when the frame body is handled. The anti-slip function includes hooking a human finger or a robot claw on the first connecting surface. A frame body provided with the first connecting surface facilitates assembly of a cell frame constituted by the frame body and a bipolar plate. A frame body provided with the first connecting surface facilitates assembly of a layered body in which a cell frame, a positive electrode, a membrane, a negative electrode, and another cell frame are sequentially stacked.

(2) In the frame body according to (1), the second outer peripheral surface may be located farther from the inner peripheral surface than the first outer peripheral surface.

In the frame body of (2) above, a step is constituted by the first outer peripheral surface, the second outer peripheral surface, and the first connecting surface. The first connecting surface easily allows a human finger or a robot claw to be hooked thereon.

(3) In the frame body according to (1) or (2) above, in a cross section of the frame body orthogonal to the first surface and the first outer peripheral surface, on the connecting surface, a point located closest to the inner peripheral surface is a first point, a point located farthest from the inner peripheral surface is a second point, and a distance between the first point and the second point may be 1% or more of a maximum thickness of the frame body.

When the above distance is 1% or more of the maximum thickness of the frame body, the area of the first connecting surface is easily increased. When the area of the first connecting surface is large, a human finger or a robot claw is easily hooked on the first connecting surface. In the present specification, a "cross section of the frame body orthogonal to the first surface and the first outer peripheral surface" may be simply referred to as a "cross section of the frame body". This "cross section of the frame body" is a cross section of a frame body piece on one side of the frame body pieces on both sides of a through hole.

(4) In the frame body according to any one of (1) to (3) above, a width of the second outer peripheral surface may be smaller than a width of the first outer peripheral surface.

In the frame body according to (4) above, the width of the first outer peripheral surface is different from the width of the second outer peripheral surface. When the width of the first outer peripheral surface is different from the width of the second outer peripheral surface, a front side and a back side of the frame body are easily distinguished from each other.

(5) In the frame body according to (4) above, the width of the second outer peripheral surface may be 5% to 20% of a maximum thickness of the frame body.

When the width of the second outer peripheral surface is 5% or more of the maximum thickness of the frame body, the first connecting surface is less likely to be provided in a position biased toward the vicinity of the second surface. For example, in the case where a step is constituted by the first outer peripheral surface, the second outer peripheral surface, and the first connecting surface, when the width of the second outer peripheral surface is 5% or more of the maximum thickness of the frame body, a protruding portion constituted by the second outer peripheral surface, the first connecting surface, and the second surface does not become excessively thin. The protruding portion having a certain thickness is unlikely to break. When the width of the second outer peripheral surface is 20% or less of the maximum thickness of the frame body, the front side and the back side of the frame body are easily distinguished from each other.

(6) In the frame body according to any one of (1) to (5) above, the first outer peripheral surface may be inclined so as to gradually approach the inner peripheral surface as the first outer peripheral surface extends from a point at which the first outer peripheral surface and the first connecting surface intersect toward the first surface.

When the first outer peripheral surface is inclined, a human finger or a robot claw is easily hooked on the first connecting surface. When the first outer peripheral surface is inclined, a space for arranging a human finger or a robot claw with respect to the first connecting surface is easily formed.

(7) In the frame body according to any one of (1) to (6) above, the first corner portion may be rounded.

When the first corner portion is rounded, even if frame bodies come into contact with each other during assembly of the cell frame or the layered body, the frame bodies are less likely to damage each other.

(8) In the frame body according to any one of (1) to (7) above, the second corner portion may be rounded.

When the second corner portion is rounded, even if frame bodies come into contact with each other during assembly of the cell frame or the layered body, the frame bodies are less likely to be damaged.

(9) In the frame body according to any one of (1) to (8) above, the first connecting surface may be continuously provided over an entire periphery of the first outer peripheral surface.

In the case where the first connecting surface is continuously provided over the entire periphery of the first outer peripheral surface, a human finger or a robot claw can be hooked on the first connecting surface at any position on the outer periphery of the frame body. In the case where the first connecting surface is continuously provided over the entire periphery of the first outer peripheral surface, stress is less likely to concentrate in a portion where the first outer peripheral surface and the first connecting surface intersect, as compared with a case where the first connecting surface is provided on a part of the entire periphery of the first outer peripheral surface. Therefore, a protruding portion constituted by the first connecting surface is unlikely to break.

(10) The frame body according to any one of (1) to (9) above may include a cut-out surface. The inner peripheral surface may be continuous with the first surface via the cut-out surface and a corner portion.

The frame body supports a bipolar plate on the cut-out surface. When the frame body includes the cut-out surface, the bipolar plate can be disposed only at the position of the cut-out surface.

(11) A cell frame according to an embodiment of the present disclosure includes the frame body according to any one of (1) to (10) above, and a bipolar plate supported by the frame body.

The cell frame is easy to assemble because the cell frame includes the above frame body.

(12) A battery cell according to an embodiment of the present disclosure includes the cell frame according to (11) above.

The battery cell is easy to assemble because the battery cell includes the above cell frame.

(13) A cell stack according to an embodiment of the present disclosure includes the battery cell according to (12) above.

The cell stack is easy to assemble because the cell stack includes the above battery cell.

(14) A redox flow battery system according to an embodiment of the present disclosure includes the battery cell according to (12) above or the cell stack according to (13) above.

The redox flow battery system is easy to assemble because the redox flow battery system includes the above battery cell or the above cell stack.

### [Details of Embodiments of Present Disclosure]

Specific examples of a frame body, a cell frame, a battery cell, a cell stack, and a redox flow battery system according to the present disclosure will be described with reference to the drawings. The same reference signs in the drawings denote the same or corresponding parts. In the drawings, a part of the configuration may be illustrated in an exaggerated or simplified manner for convenience of description. Ratios of dimensions of components in the drawings may be different from actual ratios of dimensions. The present invention is not limited to the examples, but is defined by the appended claims, and is intended to include all modifications that fall within the scope of the claims and the equivalents thereof. Hereinafter, a redox flow battery may be referred to as an "RF battery".

### <Frame body>

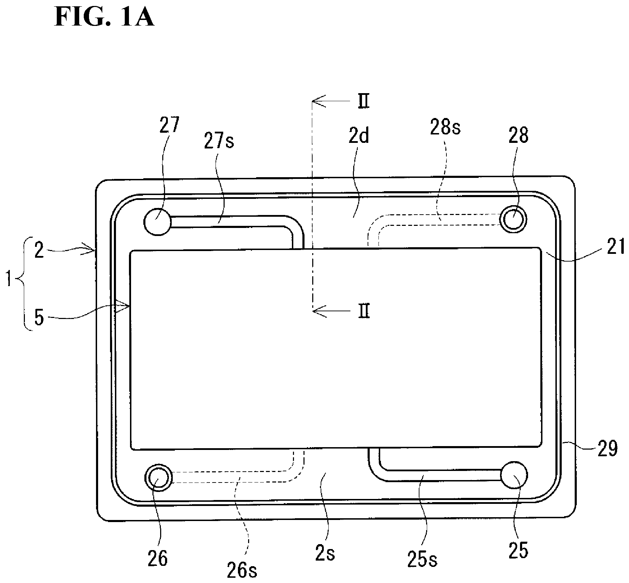

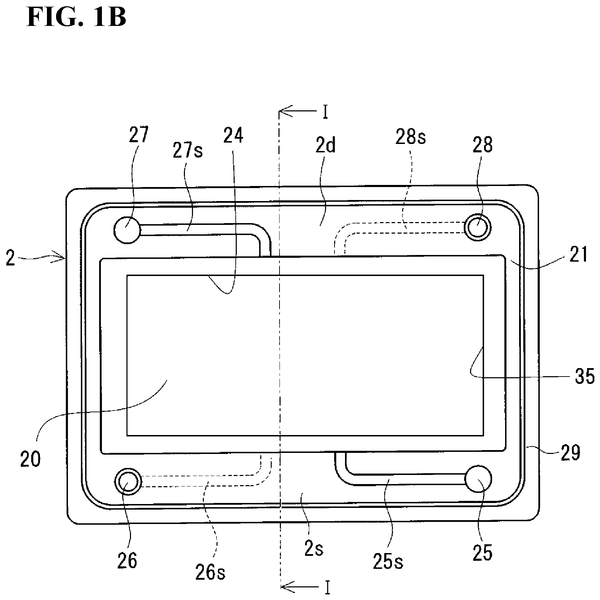

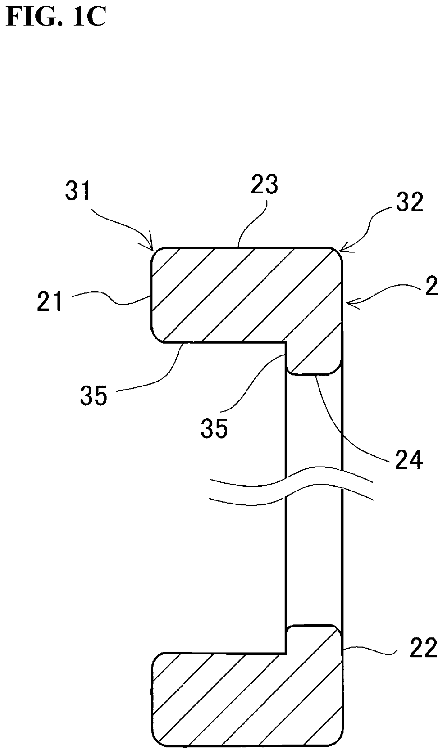

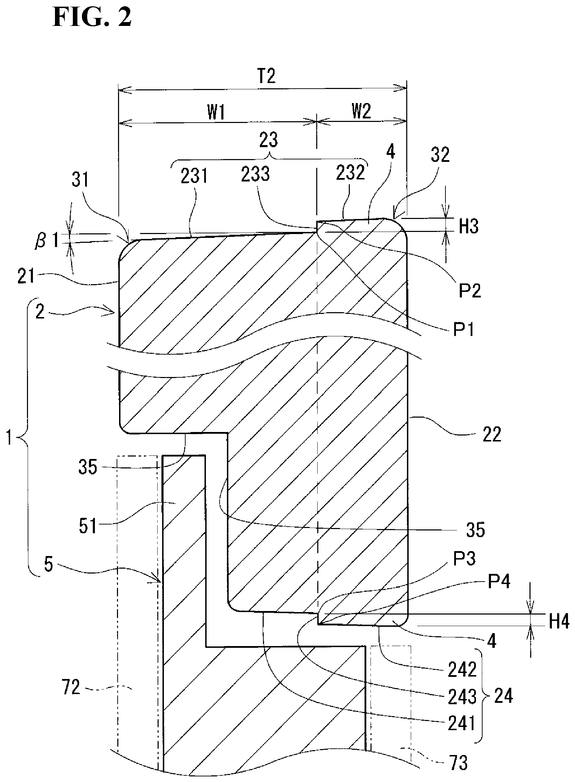

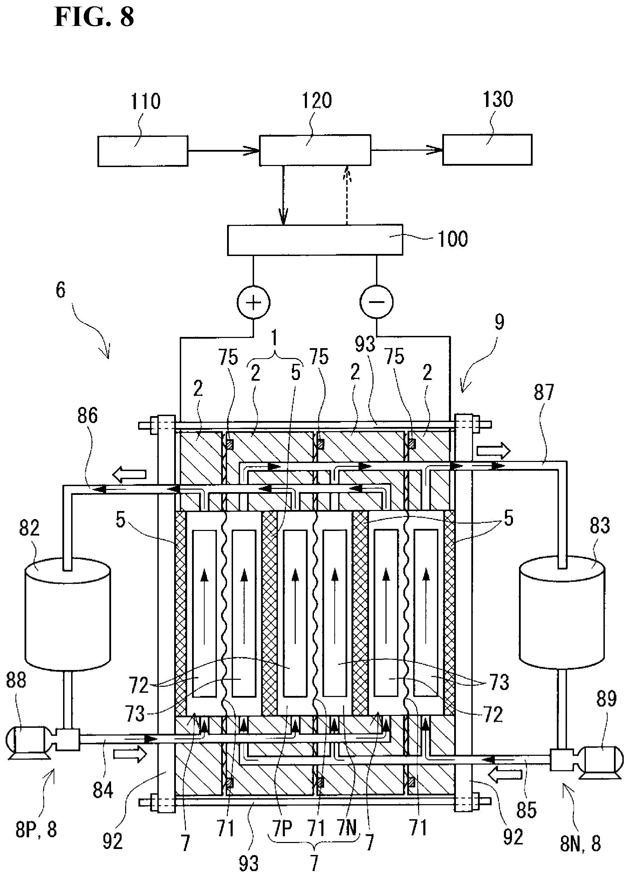

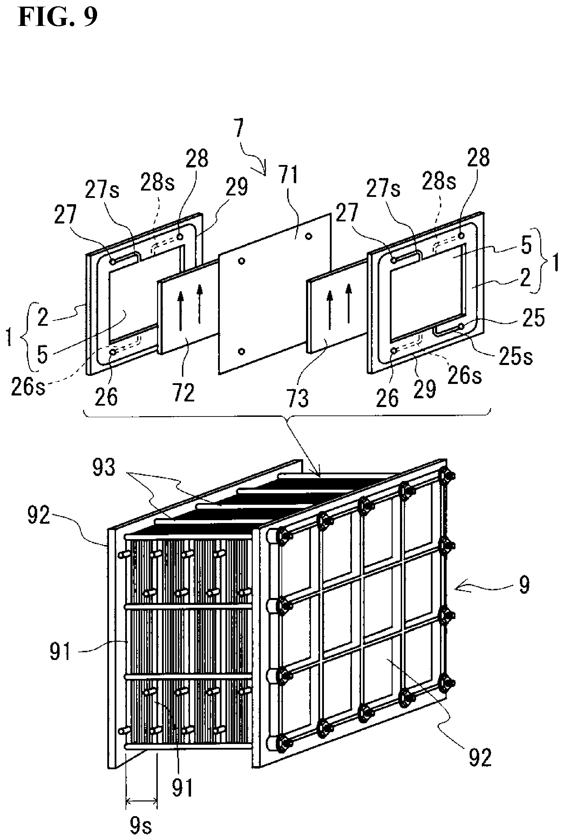

A frame body 2 according to an embodiment will be described with reference to FIGS. 1A, 1B, 1C, 2, and 3. The frame body 2 is a component of a cell frame 1. Referring to FIGS. 8 and 9, the cell frame 1 is a component of an RF battery system 6 described later. One of the features of the frame body 2 lies in that an outer peripheral surface 23 of the frame body 2 includes a connecting surface 233, as illustrated in FIG. 2. Note that, in FIGS. 1A to 1C, the connecting surface 233, a connecting surface 243, and a protruding portion 4 are not illustrated. In FIG. 1C, liquid supply manifolds 25 and 26, liquid supply slits 25s and 26s, liquid drainage manifolds 27 and 28, liquid drainage slits 27s and 28s, and a sealing groove 29 are not illustrated.

The frame body 2 includes a first surface 21, a second surface 22, an outer peripheral surface 23, and an inner peripheral surface 24.

The first surface 21 is a front surface of the frame body 2, and the second surface 22 is a back surface of the frame body 2; alternatively, the first surface 21 is a back surface of the frame body 2, and the second surface 22 is a front surface of the frame body 2. A battery cell 7 described later includes a layered body, and the frame body 2 is one of components of the layered body. Each of the first surface 21 and the second surface 22 is a surface facing another frame body disposed adjacent to the frame body 2 in the layered body. A through hole 20 is formed in the frame body 2. In the present embodiment, a cut-out surface 35 has an opening edge of the through hole 20. A part of a bipolar plate 5 described later is disposed in the through hole 20. The first surface 21 and the second surface 22 are each a flat surface. The first surface 21 and the second surface 22 are parallel to each other. Adjacent frame bodies 2 are stacked such that a first surface 21 and a second surface 22 face each other.

The outer peripheral surface 23 constitutes an outer shape of the frame body 2. The outer peripheral surface 23 is continuous with the first surface 21 via a first corner portion 31 and is continuous with the second surface 22 via a second corner portion 32. The inner peripheral surface 24 constitutes the through hole 20. In the present embodiment, the inner peripheral surface 24 is continuous with the first surface 21 via a corner portion and the cut-out surface 35. The inner peripheral surface 24 is continuous with the second surface 22 via a corner portion. In the frame body 2 illustrated in FIG. 1A, the outer shape is rectangular, and the shape of the through hole 20 is also rectangular. The outer shape of the frame body 2 and the shape of the through hole 20 can be selected as appropriate.

The frame body 2 includes, among four pieces constituting the rectangular frame body 2, a supply piece 2s and a drainage piece 2d facing each other. In the frame body 2 illustrated in FIG. 1A, the supply piece 2s is located below, and the drainage piece 2d is located above.

The first surface 21 includes a supply channel and a drainage channel of an electrolyte. The supply channel is provided in the supply piece 2s, and the drainage channel is provided in the drainage piece 2d.

The supply channel of the first surface 21 includes a liquid supply manifold 25 and a liquid supply slit 25s. The liquid supply manifold 25 is a supply port of the electrolyte. The liquid supply manifold 25 extends through the frame body 2 from the first surface 21 to the second surface 22. The liquid supply slit 25s connects the liquid supply manifold 25 and the through hole 20. The supply channel of the first surface 21 may further include a liquid supply-straightening portion, which is not illustrated. In a case where the liquid supply-straightening portion is provided along an inner edge of the first surface 21, the liquid supply slit 25s connects the liquid supply manifold 25 and the liquid supply-straightening portion. The liquid supply-straightening portion diffuses the electrolyte flowing from the liquid supply slit 25s along the inner edge of the first surface 21. The liquid supply-straightening portion may be provided on the bipolar plate 5.

The drainage channel of the first surface 21 includes a liquid drainage manifold 27 and a liquid drainage slit 27s. The liquid drainage manifold 27 is a drainage port of the electrolyte. The liquid drainage manifold 27 extends through the frame body 2 from the first surface 21 to the second surface 22. The liquid drainage slit 27s connects the liquid drainage manifold 27 and the through hole 20. The drainage channel of the first surface 21 may further include a liquid drainage-straightening portion, which is not illustrated. In a case where the liquid drainage-straightening portion is provided along an inner edge of the first surface 21, the liquid drainage slit 27s connects the liquid drainage manifold 27 and the liquid supply-straightening portion. The liquid drainage-straightening portion gathers the electrolyte flowing from a positive electrode 72 or a negative electrode 73 that is described later and disposed on the bipolar plate 5 along the inner edge of the first surface 21 and causes the electrolyte to flow through the liquid drainage slit 27s. The liquid drainage-straightening portion may be provided on the bipolar plate 5.

The frame body 2 further includes a sealing groove 29 on the first surface 21. The sealing groove 29 is continuously provided over the entire periphery of the frame body 2 so as to surround the supply channel and the drainage channel of the electrolyte.

As with the first surface 21, the second surface 22 includes a supply channel and a drainage channel of an electrolyte. The supply channel of the second surface 22 includes a liquid supply manifold 26 and a liquid supply slit 26s. The supply channel of the second surface 22 may also further include a liquid supply-straightening portion, which is not illustrated. The drainage channel of the second surface 22 includes a liquid drainage manifold 28 and a liquid drainage slit 28s. The drainage channel of the second surface 22 may also further include a liquid drainage-straightening portion, which is not illustrated. In FIG. 1A, the liquid supply slit 26s and the liquid drainage slit 28s are indicated by broken lines. If the electrolyte flowing through the supply channel and the drainage channel of the first surface 21 is a positive electrolyte, the electrolyte flowing through the supply channel and the drainage channel of the second surface 22 is a negative electrolyte. If the electrolyte flowing through the supply channel and the drainage channel of the first surface 21 is a negative electrolyte, the electrolyte flowing through the supply channel and the drainage channel of the second surface 22 is a positive electrolyte. The second surface 22 may include or need not necessarily include a sealing groove, which is not illustrated.

A maximum thickness T2 of the frame body 2 is, for example, 3 mm to 15 mm. The maximum thickness T2 is the maximum length between the first surface 21 and the second surface 22 in a direction orthogonal to the first surface 21. When the maximum thickness T2 is 3 mm or more, the frame body 2 has high mechanical strength. When the maximum thickness T2 is 15 mm or less, a battery cell 7 including frame bodies 2 (see the upper drawing of FIG. 9) and a cell stack 9 including such battery cells 7 (see FIG. 8 and the lower drawing of FIG. 9) are less likely to increase in size. The maximum thickness T2 may be 4 mm to 14 mm, or 5 mm to 13 mm.

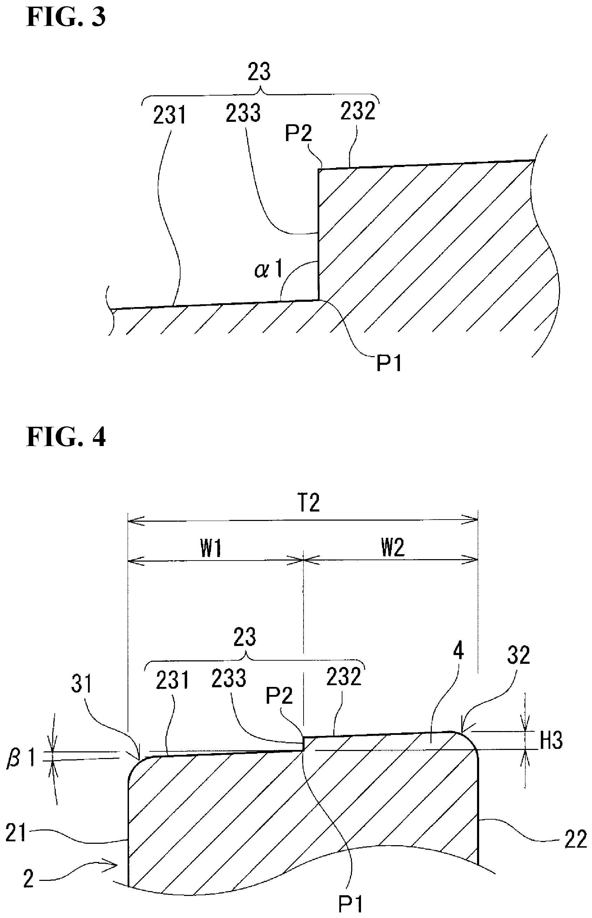

As illustrated in FIG. 2, the outer peripheral surface 23 includes a first outer peripheral surface 231, a second outer peripheral surface 232, and a connecting surface 233. The first outer peripheral surface 231 is continuous with the first surface 21 via the first corner portion 31. The second outer peripheral surface 232 is continuous with the second surface 22 via the second corner portion 32. The connecting surface 233 connects the first outer peripheral surface 231 and the second outer peripheral surface 232. The connecting surface 233 has a first connecting surface continuous with the first outer peripheral surface 231. An interior angle α1 (see FIG. 3) formed by the first connecting surface and the first outer peripheral surface 231 is less than 180°. In the present embodiment, the entirety of the connecting surface 233 is the first connecting surface. Therefore, the first connecting surface is simply referred to as the connecting surface 233.

The interior angle α1 is an angle formed by the first outer peripheral surface 231 and the connecting surface 233. As illustrated in FIG. 3, the interior angle α1 is an angle formed outside the frame body 2, and is not an angle formed inside the frame body 2. FIG. 2 illustrates, as an example, a case where the interior angle α1 is an obtuse angle, specifically, an angle obtained by adding 90° to an inclination angle β1 described later. In the case where the interior angle α1 is an obtuse angle, the connecting surface 233 may be an inclined surface such that an outer peripheral edge of the connecting surface 233 is farther from the first surface 21 than an inner peripheral edge thereof. The interior angle α1 may be other than an obtuse angle, that is, may be a right angle or an acute angle. In the case where the interior angle α1 is an acute angle, the connecting surface 233 may be, for example, an inclined surface such that the outer peripheral edge of the connecting surface 233 is closer to the first surface 21 than the inner peripheral edge thereof. The outer peripheral edge of the connecting surface 233 connects the second outer peripheral surface 232 and the connecting surface 233. The inner peripheral edge of the connecting surface 233 connects the first outer peripheral surface 231 and the connecting surface 233. The interior angle α1 may be 60° to 120°, or may be 70° to 110°.

The connecting surface 233 has an anti-slip function when the frame body 2 is handled. For example, when the cell frame 1 described later is assembled or when the layered body described later is assembled, a human finger or a robot claw can be hooked on the connecting surface 233. The connecting surface 233 is, for example, a flat surface. In the case where the connecting surface 233 is a flat surface, a human finger or a robot claw is easily hooked on the connecting surface 233, as compared with the case where the connecting surface 233 is a curved surface. The connecting surface 233 is provided so as to constitute a protruding portion 4 partially protruding from the first outer peripheral surface 231.

The connecting surface 233 is, for example, continuously provided over the entire periphery of the first outer peripheral surface 231. In the case where the connecting surface 233 is continuously provided over the entire periphery of the first outer peripheral surface 231, a human finger or a robot claw can be hooked on the connecting surface 233 at any position on the outer periphery of the frame body 2. In the case where the connecting surface 233 is continuously provided over the entire periphery of the first outer peripheral surface 231, stress is less likely to concentrate in a portion where the first outer peripheral surface 231 and the connecting surface 233 intersect, as compared with a case where the connecting surface 233 is provided on a part of the entire periphery of the first outer peripheral surface 231. Therefore, the protruding portion 4 constituted by the connecting surface 233 is unlikely to break. The connecting surface 233 may be provided only on a part of the first outer peripheral surface 231. The connecting surface 233 may be discontinuously provided over the entire periphery of the first outer peripheral surface 231. In this case, the protruding portion 4 is provided on a part of the entire periphery of the first outer peripheral surface 231.

The second outer peripheral surface 232 is located farther from the inner peripheral surface 24 than the first outer peripheral surface 231. On the outer peripheral surface 23, a step is constituted by the first outer peripheral surface 231, the second outer peripheral surface 232, and the connecting surface 233. In FIG. 2, the second outer peripheral surface 232 is a higher surface than the first outer peripheral surface 231, and the first outer peripheral surface 231 is a lower surface than the second outer peripheral surface 232. The protruding portion 4 is constituted in a portion between an extension surface of the first outer peripheral surface 231 and the second outer peripheral surface 232. A corner portion connecting the second outer peripheral surface 232 and the connecting surface 233 may be rounded, or need not be rounded as illustrated in FIG. 2. The connecting surface 233 easily allows a human finger or a robot claw to be hooked thereon. Since stress is less likely to concentrate on the connecting surface 233, the protruding portion 4 is unlikely to break.

In FIG. 2 (that is, in the cross section of the frame body 2), a first point P1 is a point on the connecting surface 233 located closest to the inner peripheral surface 24. A second point P2 is a point located farthest from the inner peripheral surface 24. A distance H3 between the first point P1 and the second point P2 is, for example, 1% or more of the maximum thickness T2. In the present embodiment, the first point P1 is, in FIG. 2, a point at which the first outer peripheral surface 231 and the connecting surface 233 intersect. In the present embodiment, the second point P2 is, in FIG. 2, a point at which the second outer peripheral surface 232 and the connecting surface 233 intersect. When the distance H3 is 1% or more of the maximum thickness T2, the area of the connecting surface 233 is easily increased. When the area of the connecting surface 233 is large, a human finger or a robot claw is easily hooked on the connecting surface 233. When the distance H3 is large, a human finger or a robot claw is easily hooked on the connecting surface 233. The distance H3 may be 1.5% or more, 2% or more, 3% or more, or 4% or more of the maximum thickness T2. In a case where the distance H3 is not uniform over the entire outer periphery of the frame body 2, a maximum distance H3 (Max) is simply referred to as the distance H3 in the present specification. The distance H3 (Max) is, for example, a maximum distance H3 among the distances H3 in any ten cross sections of the frame body 2.

The distance H3 is, for example, 35% or less of the maximum thickness T2. When the distance H3 is 35% or less of the maximum thickness T2, even if a large stress acts on the protruding portion 4 constituted by the connecting surface 233, the protruding portion 4 is unlikely to break. The distance H3 may be 30% or less, 25% or less, or 20% or less of the maximum thickness T2. The distance H3 may be 1% to 35%, 1.5% to 35%, 2% to 30%, 3% to 25%, or 4% to 20% of the maximum thickness T2.

The distance H3 is, for example, 0.06 mm to 2 mm. When the distance H3 is 0.06 mm or more, a human finger or a robot claw is easily hooked on the connecting surface 233. When the distance H3 is 2 mm or less, even if a large stress acts on the protruding portion 4 constituted by the connecting surface 233, the protruding portion 4 is unlikely to break. The distance H3 may be 0.08 mm to 1.8 mm, 0.10 mm to 1.6 mm, 0.15 mm to 1.5 mm, or 0.20 mm to 1.5 mm.

In the present embodiment, a width W1 of the first outer peripheral surface 231 and a width W2 of the second outer peripheral surface 232 are different from each other. The width W1 is a maximum length from a point at which the first outer peripheral surface 231 and the connecting surface 233 intersect to the first surface 21 in a direction orthogonal to the first surface 21. W2 is a maximum length from a point at which the second outer peripheral surface 232 and the connecting surface 233 intersect to the second surface 22 in a direction orthogonal to the second surface 22. When the width W1 and the width W2 are different from each other, a front side and a back side of the frame body 2 are easily distinguished from each other. In the present embodiment, the width W2 is smaller than the width W1.

The width W2 is, for example, 5% to 20% of the maximum thickness T2. When the width W2 is 5% or more of the maximum thickness T2, the connecting surface 233 is less likely to be provided in a position biased toward the vicinity of the second surface 22. In the case where the connecting surface 233 constitutes a step, when the width W2 is 5% or more of the maximum thickness T2, the protruding portion 4 does not become excessively thin. The protruding portion 4 having a certain thickness is unlikely to break. When the width W2 is 20% or less of the maximum thickness T2, the front side and the back side of the frame body 2 are easily distinguished from each other. The width W2 may be 6% to 19%, 6% to 18%, 7% to 16%, or 8% to 15% of the maximum thickness T2.

The first outer peripheral surface 231 may be inclined so as to gradually approach the inner peripheral surface 24 as the first outer peripheral surface 231 extends from a point at which the first outer peripheral surface 231 and the connecting surface 233 intersect toward the first surface 21. When the first outer peripheral surface 231 is inclined, a human finger or a robot claw is easily hooked on the connecting surface 233. When the first outer peripheral surface 231 is inclined, a space for arranging a human finger or a robot claw with respect to the connecting surface 233 is easily formed. An inclination angle β1 of the first outer peripheral surface 231 is, for example, 1° to 45°. The inclination angle β1 is an angle formed by the first outer peripheral surface 231 and a plane orthogonal to the first surface 21 and orthogonal to the cross section of the frame body 2. In the present specification, a plane orthogonal to the first surface 21 and orthogonal to the cross section of the frame body 2 may be simply referred to as "a plane orthogonal to the first surface 21". When the inclination angle β1 is 1° or more, a human finger or a robot claw is easily hooked on the connecting surface 233. When the inclination angle β1 is 45° or less, the area of the first outer peripheral surface 231 does not become excessively large, that is, the area of the first surface 21 does not become excessively small. The inclination angle β1 may be 1.5° to 40°, 2° to 35°, or 3° to 35°.

The second outer peripheral surface 232 may be inclined so as to gradually become farther from the inner peripheral surface 24 as the second outer peripheral surface 232 extends from a point at which the second outer peripheral surface 232 and the connecting surface 233 intersect toward the second surface 22. In the present embodiment, the second outer peripheral surface 232 is not parallel to the plane orthogonal to the first surface 21. In the present embodiment, the connecting surface 233 is parallel to the first surface 21. The connecting surface 233 need not be parallel to the first surface 21.

In the present embodiment, the first corner portion 31 is rounded. When the first corner portion 31 is rounded, even if the frame bodies 2 come into contact with each other during assembly of the cell frame 1 described later or during assembly of the layered body described later, the frame bodies 2 are less likely to damage each other. A radius of curvature of the first corner portion 31 is, for example, 0.2 mm to 5 mm. When the radius of curvature of the first corner portion 31 is 0.2 mm or more, even if the frame bodies 2 come into contact with each other, the frame bodies 2 are less likely to damage each other. When the radius of curvature of the first corner portion 31 is 5 mm or less, the area of the first surface 21 easily becomes large, and the contact area between the frame bodies 2 easily becomes large. The radius of curvature of the first corner portion 31 may be 0.3 mm to 4 mm, or 0.4 mm to 3 mm.

The radius of curvature of the first corner portion 31 is, for example, 1% to 60% of the maximum thickness T2. When the radius of curvature of the first corner portion 31 is 1% or more of the maximum thickness T2, even if the frame bodies 2 come into contact with each other, the frame bodies 2 are less likely to damage each other. When the radius of curvature of the first corner portion 31 is 60% or less of the maximum thickness T2, the area of the first surface 21 easily becomes large, and the contact area between the frame bodies 2 easily becomes large. The radius of curvature of the first corner portion 31 may be 2% to 55%, or 3% to 50% of the maximum thickness T2.

In the present embodiment, the second corner portion 32 is rounded. When the second corner portion 32 is rounded, even if the frame bodies 2 come into contact with each other during assembly of the cell frame 1 or during assembly of the layered body, the frame bodies 2 are less likely to damage each other. A radius of curvature of the second corner portion 32 is, for example, 0.2 mm to 5 mm. When the radius of curvature of the second corner portion 32 is 0.2 mm or more, even if the frame bodies 2 come into contact with each other, the frame bodies 2 are less likely to damage each other. When the radius of curvature of the second corner portion 32 is 5 mm or less, the area of the second surface 22 easily becomes large, and the contact area between the frame bodies 2 easily becomes large. The radius of curvature of the second corner portion 32 may be 0.3 mm to 4 mm, or 0.4 mm to 3 mm. Depending on the radius of curvature of the second corner portion 32, the entirety of the second outer peripheral surface 232 may be the second corner portion 32.

The radius of curvature of the second corner portion 32 is, for example, 1% to 60% of the maximum thickness T2. When the radius of curvature of the second corner portion 32 is 1% or more of the maximum thickness T2, even if the frame bodies 2 come into contact with each other, the frame bodies 2 are less likely to damage each other. When the radius of curvature of the second corner portion 32 is 60% or less of the maximum thickness T2, the area of the second surface 22 easily becomes large, and the contact area between the frame bodies 2 easily becomes large. The radius of curvature of the second corner portion 32 may be 2% to 55%, or 3% to 50% of the maximum thickness T2.

As with the outer peripheral surface 23, the inner peripheral surface 24 of the present embodiment includes a first inner peripheral surface 241, a second inner peripheral surface 242, and a connecting surface 243. The frame body 2 of the present embodiment includes the cut-out surface 35 described later. In the present embodiment, the cut-out surface 35 is constituted by a surface parallel to the first surface 21 and a surface perpendicular to the first surface 21. That is, a stepped portion is formed in the frame body 2. The first inner peripheral surface 241 is continuous with the first main surface 21 via the cut-out surface 35 and a corner portion. The second inner peripheral surface 242 is continuous with the second surface 22 via a corner portion. The connecting surface 243 connects the first inner peripheral surface 241 and the second inner peripheral surface 242. The connecting surface 243 has a first inner peripheral connecting surface continuous with the first inner peripheral surface 241. An interior angle formed by the first inner peripheral connecting surface and the first inner peripheral surface 241 is less than 180°. In the present embodiment, the entirety of the connecting surface 243 is the first inner peripheral connecting surface. Therefore, the first inner peripheral connecting surface is simply referred to as the connecting surface 243. In a case where the frame body 2 does not include the cut-out surface 35, the first inner peripheral surface 241 is continuous with the first surface 21 via a corner portion.

FIG. 2 illustrates, as an example, a case where an interior angle formed by the first inner peripheral surface 241 and the connecting surface 243 is an obtuse angle, specifically, an angle obtained by adding an inclination angle of the first inner peripheral surface 241 to 90°. In the case where this interior angle is an obtuse angle, the connecting surface 243 may be an inclined surface such that an inner peripheral edge of the connecting surface 243 is farther from the first surface 21 than an outer peripheral edge thereof. The interior angle formed by the first inner peripheral surface 241 and the connecting surface 243 may be other than an obtuse angle, that is, may be a right angle or an acute angle. In the case where this interior angle is an acute angle, the connecting surface 243 may be, for example, an inclined surface such that the inner peripheral edge of the connecting surface 243 is closer to the first surface 21 than the outer peripheral edge thereof. The inner peripheral edge of the connecting surface 243 connects the second inner peripheral surface 242 and the connecting surface 243. The outer peripheral edge of the connecting surface 243 connects the first inner peripheral surface 241 and the connecting surface 243. The interior angle formed by the first inner peripheral surface 241 and the connecting surface 243 may be 60° to 120°, or may be 70° to 110°. The interior angle formed by the first inner peripheral surface 241 and the connecting surface 243 may be the same as or different from the interior angle α1 (see FIG. 3) formed by the first outer peripheral surface 231 and the connecting surface 233.

As with the connecting surface 233, the connecting surface 243 also has an anti-slip function when the frame body 2 is handled. The connecting surface 243 is, for example, a flat surface. In the case where the connecting surface 243 is a flat surface, a human finger or a robot claw is easily hooked on the connecting surface 243, as compared with the case where the connecting surface 243 is a curved surface. The connecting surface 243 is provided so as to constitute a protruding portion 4 partially protruding from the first inner peripheral surface 241.

The connecting surface 243 may be continuously provided over the entire periphery of the first inner peripheral surface 241. When the connecting surface 243 is continuously provided over the entire periphery of the first inner peripheral surface 241, an anti-slip portion is provided over the entire periphery of the inner peripheral surface 24. Therefore, a human finger or a robot claw can be hooked on the connecting surface 233 at any position on the inner peripheral surface 24. The connecting surface 243 may be provided only on a part of the entire periphery of the first inner peripheral surface 241. The connecting surface 243 may be discontinuously provided over the entire periphery of the first inner peripheral surface 241.

The second inner peripheral surface 242 is located farther from the outer peripheral surface 23 than the first inner peripheral surface 241. On the inner peripheral surface 24, a step is constituted by the first inner peripheral surface 241, the second inner peripheral surface 242, and the connecting surface 243. The protruding portion 4 is constituted in a portion between an extension surface of the first inner peripheral surface 241 and the second inner peripheral surface 242. A corner portion connecting the second inner peripheral surface 242 and the connecting surface 243 may be rounded, or need not be rounded as illustrated in FIG. 2.

In FIG. 2 (that is, in the cross section of the frame body 2), a third point P3 is a point on the connecting surface 243 located closest to the outer peripheral surface 23. A fourth point P4 is a point located farthest from the outer peripheral surface 23. A distance between the third point P3 and the fourth point P4 is, for example, 1% to 35% of the maximum thickness T2. The distance may be 1.5% to 35%, 2% to 30%, 3% to 25%, or 4% to 20% of the maximum thickness T2. In a case where the distance H4 is not uniform over the entire inner periphery of the frame body 2, a maximum distance H4 (Max) among the distances H4 in any ten cross sections of the frame body 2 is simply referred to as the distance H4 in the present specification. The distance H4 (Max) is, for example, a maximum distance H4 among the distances H4 in cross sections of any ten frame bodies.

A width of the second inner peripheral surface 242 is, for example, 5% to 20% of the maximum thickness T2. The width of the second inner peripheral surface 242 may be 6% to 19%, 6% to 18%, 7% to 16%, or 8% to 15% of the maximum thickness T2.

As illustrated in FIG. 2, the first inner peripheral surface 241 may be inclined so as to gradually approach the outer peripheral surface 23 as the first inner peripheral surface 241 extends from a point at which the first inner peripheral surface 241 and the connecting surface 243 intersect toward the first surface 21. The second inner peripheral surface 242 may be inclined so as to gradually become farther from the outer peripheral surface 23 as the second inner peripheral surface 242 extends from a point at which the second inner peripheral surface 242 and the connecting surface 243 intersect toward the second surface 22.

In the case where the inner peripheral surface 24 includes the connecting surface 243, a distance from the second surface to the connecting surface 233 may be the same as a distance from the second surface to the connecting surface 243 in a thickness direction of the frame body 2. In FIG. 2, a line connecting the connecting surface 233 and the connecting surface 243 is indicated by a broken line. Unlike FIG. 2, the distance from the second surface to the connecting surface 233 may be different from the distance from the second surface to the connecting surface 243 in the thickness direction of the frame body 2.

In the present embodiment, the frame body 2 includes the cut-out surface 35 between the first surface 21 and the inner peripheral surface 24. The frame body 2 supports the bipolar plate 5 described later on the cut-out surface 35. The cut-out surface 35 constitutes a stepped portion into which the bipolar plate 5 is fitted. When the bipolar plate 5 is fitted into this stepped portion, the bipolar plate 5 can be disposed only at the position of the cut-out surface 35 of the frame body 2.

The corner portion connecting the first inner peripheral surface 241 and the cut-out surface 35 may be rounded. The corner portion connecting the second inner peripheral surface 242 and the second surface 22 may be rounded.

The frame body 2 is made of an electrically insulating material. The electrically insulating material is, for example, a resin such as a thermoplastic resin. Specific examples of the electrically insulating material are vinyl chloride, polypropylene, polyethylene, fluorine resins, epoxy, acrylonitrile-butadiene-styrene, vinylidene chloride, polyamide, polyester, polystyrene, acrylic, polyvinyl alcohol, diacetate, triacetate, and polycarbonate. The frame body 2 is, for example, an injection-molded article.

### <<Modification 1>>

As illustrated in FIG. 4, the width W1 of the first outer peripheral surface 231 may be the same as the width W2 of the second outer peripheral surface 232. A basic configuration of Modification 1 is the same as that of the above-described embodiment, except that the width W1 is the same as the width W2. The connecting surface 233 is located at a position that bisects the maximum thickness T2 of the frame body 2, and the width W2 of the second outer peripheral surface 232 is larger than that in the above-described embodiment. Therefore, the width W2 of the protruding portion 4 is large. Accordingly, in the frame body 2 of Modification 1, even if a large stress acts on the protruding portion 4, the protruding portion 4 is unlikely to break.

### <<Modification 2>>

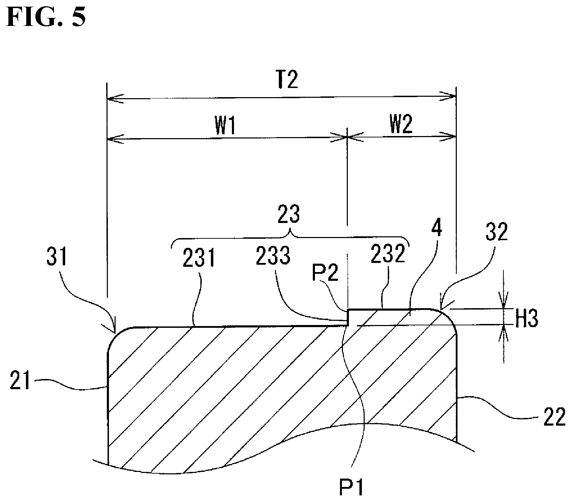

As illustrated in FIG. 5, the first outer peripheral surface 231 may be a plane that is not inclined and is orthogonal to the first surface 21. A basic configuration of Modification 2 is the same as that of the above-described embodiment, except that the inclination angle β1 is zero. The interior angle α1 (see FIG. 3) formed by the first outer peripheral surface 231 and the connecting surface 233 in Modification 2 is smaller than the interior angle α1 in the embodiment. The interior angle α1 in Modification 2 is a right angle. The first outer peripheral surface 231 may be a plane orthogonal to the first surface 21, and the width W1 and the width W2 may be the same as illustrated in FIG. 4.

### <<Modification 3>>

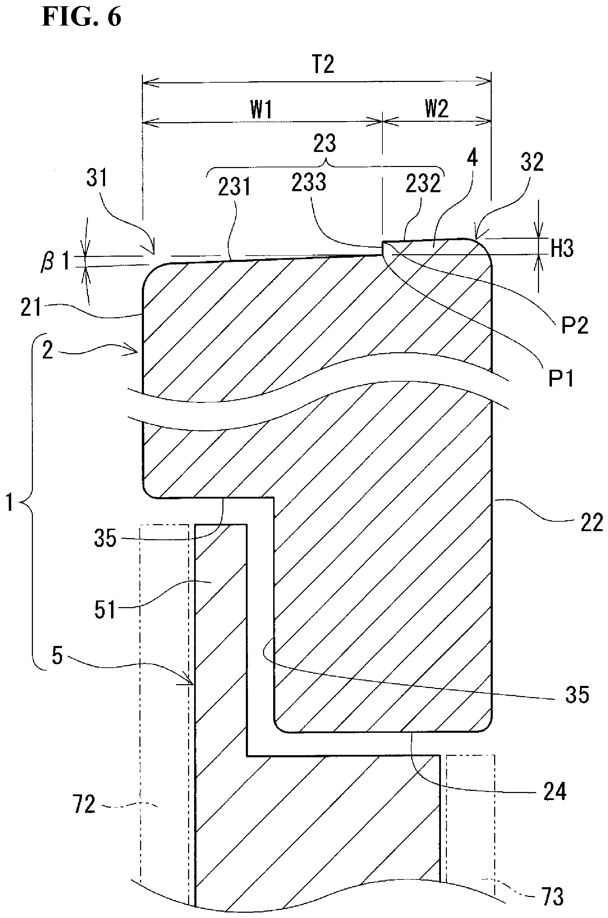

As illustrated in FIG. 6, the inner peripheral surface 24 need not include the connecting surface 243. A basic configuration of Modification 3 is the same as that of the above-described embodiment, except that the inner peripheral surface 24 does not include the connecting surface 243. The inner peripheral surface 24 of Modification 3 is a plane orthogonal to the first surface 21. When the inner peripheral surface 24 does not include the connecting surface 243, the entire surface of the inner peripheral surface 24 easily comes into contact with the bipolar plate 5.

### <<Modification 4>>

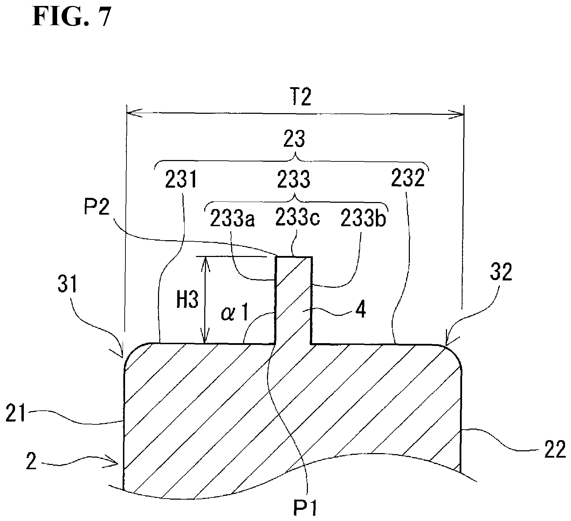

As illustrated in FIG. 7, the first outer peripheral surface 231 and the second outer peripheral surface 232 may be planes extending in the thickness direction of the frame body 2 and may be arranged so as to be aligned on the same plane. In this case, the first outer peripheral surface 231 is continuous with the second outer peripheral surface 232 via a plurality of connecting surfaces 233. The connecting surfaces 233 include a first connecting surface 233a, a second connecting surface 233b, and a third connecting surface 233c. The first connecting surface 233a is continuous with the first outer peripheral surface 231. An interior angle α1 formed by the first connecting surface 233a and the first outer peripheral surface 231 is less than 180°. The second connecting surface 233b is continuous with the second outer peripheral surface 232. An interior angle formed by the second connecting surface 233b and the second outer peripheral surface 232 is also less than 180°. The third connecting surface 233c connects the first connecting surface 233a and the second connecting surface 233b.

The first connecting surface 233a, the second connecting surface 233b, and the third connecting surface 233c constitute a protruding portion 4. The protruding portion 4 in FIG. 7 is illustrated in an exaggeratedly enlarged manner for ease of understanding. In Modification 4, the distance H3 is, for example, 1% or more of the maximum thickness T2. The method for determining the distance H3 is the same as the method in the above-described embodiment. In Modification 4, in FIG. 7, the first point P1 is a point at which the first outer peripheral surface 231 and the first connecting surface 233a intersect, and the second point P2 is a point at which the first connecting surface 233a and the third connecting surface 233c intersect. Alternatively, in FIG. 7, the first point P1 is a point at which the second outer peripheral surface 232 and the second connecting surface 233b intersect, and the second point P2 is a point at which the third connecting surface 233c and the second connecting surface 233b intersect. When the distance H3 is 1% or more of the maximum thickness T2, the areas of the first connecting surface 233a and the second connecting surface 233b are easily increased. When the areas of the first connecting surface 233a and the second connecting surface 233b are large, a human finger or a robot claw is easily hooked on the first connecting surface 233a or the second connecting surface 233b. When the distance H3 is large, a human finger or a robot claw is easily hooked on the first connecting surface 233a or the second connecting surface 233b. Ranges of the distance H3 in Modification 4 may be the same as those of the distance H3 in the above-described embodiment. Each of the first connecting surface 233a, the second connecting surface 233b, and the third connecting surface 233c is a flat surface. A cross-sectional shape of the protruding portion 4 is rectangular. The first connecting surface 233a and the second connecting surface 233b may be directly connected to each other. In this case, the third connecting surface 233c is absent, and the cross-sectional shape of the protruding portion 4 is triangular. The protruding portion 4 is provided at a position away from both the first surface 21 and the second surface 22.

In FIG. 7, the protruding portion 4 is disposed at a position that bisects the maximum thickness T2 of the frame body 2. That is, the width of the first outer peripheral surface 231 and the width of the second outer peripheral surface 232 are the same. The width of the protruding portion 4 is smaller than the width of the first outer peripheral surface 231 and the width of the second outer peripheral surface 232. The width of the protruding portion 4 may be within the range of the width W2 of the second outer peripheral surface 232 in the above-described embodiment.

A basic configuration of Modification 4 is the same as that of the above-described embodiment, except that the shape of the protruding portion 4 is different and the inclination angle β1 is zero. On the inner peripheral surface, a protruding portion 4 similar to that on the outer peripheral surface 23 may be formed, the protruding portion 4 on the inner peripheral surface 24 illustrated in FIG. 2 may be formed, or the protruding portion 4 may be absent as illustrated in FIG. 6. The frame body 2 of Modification 4 has the plurality of connecting surfaces 233, in particular, the first connecting surface 233a and the second connecting surface 233b. Therefore, a human finger or a robot claw can be hooked on either the front side or the back side of the frame body 2.

### <Cell frame>

As illustrated in FIGS. 1A and 2, a cell frame 1 includes a frame body 2 and a bipolar plate 5. The frame body 2 supports an outer peripheral edge portion of the bipolar plate 5. The bipolar plate 5 is disposed so as to close a through hole 20 of the frame body 2. In the present embodiment, a part of the bipolar plate 5 is fitted into the through hole 20. In the present embodiment, the bipolar plate 5 includes a thin portion 51. The thin portion 51 is disposed on a cut-out surface 35, so that the frame body 2 supports the thin portion 51. The thin portion 51 is thinner than the other portion of the bipolar plate 5. The cell frame 1 may be formed by injection-molding the frame body 2 on an outer periphery of the bipolar plate 5.

A thickness of the bipolar plate 5 is smaller than the maximum thickness T2 of the frame body 2. When the bipolar plate 5 is disposed in the through hole 20 of the frame body 2, a space is formed by a part of the cut-out surface 35 of the frame body 2 and a surface of the bipolar plate 5, and a space is further formed by a part of an inner peripheral surface 24 of the frame body 2 and a surface of the bipolar plate 5. That is, a space is formed by a part of the cut-out surface 35 and a first surface of the bipolar plate 5, and a space is formed by a part of the inner peripheral surface 24 and a second surface of the bipolar plate 5. A positive electrode 72 is disposed in the space formed by the cut-out surface 35 and the first surface of the bipolar plate 5. A negative electrode 73 is disposed in the space formed by the inner peripheral surface 24 of the frame body 2 and the second surface of the bipolar plate 5. In FIG. 2, the positive electrode 72 and the negative electrode 73 are indicated by two-dot chain lines. The negative electrode 73 may be disposed in the space formed by the cut-out surface 35 and the first surface of the bipolar plate 5, and the positive electrode 72 may be disposed in the space formed by the inner peripheral surface 24 and the second surface of the bipolar plate 5.

### <RF battery system>

An RF battery system 6 according to an embodiment will be described with reference to FIGS. 8 and 9. The RF battery system 6 is one of electrolyte-circulating storage battery systems. The RF battery system 6 includes battery cells 7 and a circulation mechanism 8 configured to circulate electrolytes through the battery cells 7. The RF battery system 6 performs charging and discharging while supplying the battery cells 7 with the electrolytes. In FIGS. 8 and 9, the connecting surface 233 of the frame body 2 is not illustrated for convenience of description.

Typically, the RF battery system 6 is connected to an alternating current/direct current converter 100, the alternating current/direct current converter 100 is connected to a transformer facility 120, and the transformer facility 120 is connected to a power generation unit 110 and a load 130. The RF battery system 6 performs charging by using the power generation unit 110 as a power supply source and performs discharging to the load 130 serving as a power supply target. The power generation unit 110 is, for example, a solar photovoltaic power generator, a wind power generator, or another power generator provided in a general power plant. The load 130 is, for example, a power system or a consumer of the power. The RF battery system 6 is used, for example, for load leveling, momentary voltage drop compensation, or output smoothing of natural energy power generation. The RF battery system 6 can also be used as an emergency power supply.

### <Battery cell>

As illustrated in FIG. 8, each battery cell 7 is separated into a positive cell 7P and a negative cell 7N by a membrane 71. The positive cell 7P contains a positive electrode 72 therein. A positive electrolyte is circulated through the positive cell 7P. The positive electrode 72 is a reaction field in which an active material contained in the positive electrolyte causes battery reactions. The negative cell 7N contains a negative electrode 73 therein. A negative electrolyte is circulated through the negative cell 7N. The negative electrode 73 is a reaction field in which an active material contained in the negative electrolyte causes battery reactions. The membrane 71 is, for example, an ionexchange membrane.

As illustrated in FIG. 8 and the upper drawing of FIG. 9, the battery cell 7 includes a layered body in which a cell frame 1, a positive electrode 72, a membrane 71, a negative electrode 73, and another cell frame 1 are sequentially stacked. In each cell frame 1, the positive electrode 72 is disposed on a first surface of a bipolar plate 5, and the negative electrode 73 is disposed on a second surface of the bipolar plate 5. One battery cell 7 is constituted between the bipolar plates 5 of two adjacent cell frames 1. A ring-shaped sealing member 75 is disposed between the frame body 2 and another frame body 2. The sealing member 75 is disposed in a sealing groove 29 provided in the first surface 21. The sealing member 75 makes leakage of the electrolyte from the battery cell 7 less likely.

### <Cell stack>

The battery cells 7 are typically constituted inside a structure called a cell stack 9. As illustrated in the lower drawing of FIG. 9, the cell stack 9 includes a substack 9S, two end plates 92, and a fastening mechanism 93. The cell stack 9 includes, for example, a plurality of substacks 9S. Each substack 9S includes a layered body and two supply/drainage plates 91. In the layered body, as illustrated in FIG. 8 and the upper drawing of FIG. 9, the cell frame 1, the positive electrode 72, the membrane 71, the negative electrode 73, and another cell frame 1 are stacked in this order. As illustrated in the lower drawing of FIG. 9, the supply/drainage plates 91 are disposed on both ends of the layered body. To the supply/drainage plates 91, a supply pipe 84 and a drainage pipe 86 of a positive electrolyte circulation mechanism 8P, and a supply pipe 85 and a drainage pipe 87 of a negative electrolyte circulation mechanism 8N, which will be described later, are connected. The two end plates 92 sandwich the plurality of substacks 9S. The fastening mechanism 93 fastens the two end plates 92 so that the end plates 92 approach each other.

### <Circulation mechanism>

As illustrated in FIG. 8, a circulation mechanism 8 includes a positive electrolyte circulation mechanism 8P and a negative electrolyte circulation mechanism 8N. The positive electrolyte circulation mechanism 8P circulates a positive electrolyte through positive cells 7P. The negative electrolyte circulation mechanism 8N circulates a negative electrolyte through negative cells 7N.

The positive electrolyte circulation mechanism 8P includes a positive electrolyte tank 82, a supply pipe 84, a drainage pipe 86, and a pump 88. The positive electrolyte tank 82 stores the positive electrolyte. The supply pipe 84 and the drainage pipe 86 connect the positive electrolyte tank 82 and the positive cells 7P. The pump 88 is provided in the middle of the supply pipe 84 and pressure-feeds the positive electrolyte in the positive electrolyte tank 82 to the positive cells 7P. The positive electrolyte is supplied from the positive electrolyte tank 82 to the positive cells 7P through the supply pipe 84 and is returned from the positive cells 7P to the positive electrolyte tank 82 through the drainage pipe 86. Specifically, the positive electrolyte passing through the supply pipe 84 is supplied from a liquid supply manifold 25 illustrated in the upper drawing of FIG. 9 to the positive electrode 72 through a liquid supply slit 25s. The positive electrolyte supplied to the positive electrode 72 flows from the bottom to the top of the positive electrode 72 as indicated by the arrows of the upper drawing of FIG. 9. The positive electrolyte flowing through the positive electrode 72 is drained from a liquid drainage manifold 27 to the drainage pipe 86 through a liquid drainage slit 27s.

The negative electrolyte circulation mechanism 8N includes a negative electrolyte tank 83, a supply pipe 85, a drainage pipe 87, and a pump 89. The negative electrolyte tank 83 stores the negative electrolyte. The supply pipe 85 and the drainage pipe 87 connect the negative electrolyte tank 83 and the negative cells 7N. The pump 89 is provided in the middle of the supply pipe 85 and pressure-feeds the negative electrolyte in the negative electrolyte tank 83 to the negative cells 7N. The negative electrolyte is supplied from the negative electrolyte tank 83 to the negative cells 7N through the supply pipe 85 and is returned from the negative cells 7N to the negative electrolyte tank 83 through the drainage pipe 87. Specifically, the negative electrolyte passing through the supply pipe 85 is supplied from a liquid supply manifold 26 illustrated in the upper drawing of FIG. 9 to the negative electrode 73 through a liquid supply slit 26s. The negative electrolyte supplied to the negative electrode 73 flows from the lower end to the upper end of the negative electrode 73 as indicated by the arrows of the upper drawing of FIG. 9. The negative electrolyte flowing through the negative electrode 73 is drained from a liquid drainage manifold 28 to the drainage pipe 87 through a liquid drainage slit 28s.

The positive electrolyte is circulated through the positive cells 7P, and the negative electrolyte is circulated through the negative cells 7N. In the battery cells 7, charging and discharging are performed in association with valence change reactions of active material ions in the positive electrolyte and the negative electrolyte.

The active material contained in the positive electrolyte, a solvent of the positive electrolyte, the active material contained in the negative electrolyte, and a solvent of the negative electrolyte are not particularly limited. The active material of the positive electrolyte is, for example, one or more selected from the group consisting of vanadium ions, manganese ions, iron ions, polyacids, quinone derivatives, amines, and organometallic complexes. The active material of the negative electrolyte is, for example, one or more selected from the group consisting of vanadium ions, titanium ions, chromium ions, polyacids, quinone derivatives, amines, and organometallic complexes. Both the positive electrolyte and the negative electrolyte may contain vanadium ions. The solvents of the positive electrolyte and the negative electrolyte are, for example, aqueous solutions containing one or more acids or salts of acids selected from the group consisting of sulfuric acid, phosphoric acid, nitric acid, and hydrochloric acid.

### REFERENCE SIGNS LIST

- 1: cell frame
- 2: frame body
- 2s: supply piece
- 2d: drainage piece
- 20: through hole
- 21: first surface
- 22: second surface
- 23: outer peripheral surface
- 231: first outer peripheral surface
- 232: second outer peripheral surface
- 233: connecting surface
- 233a: first connecting surface
- 233b: second connecting surface
- 233c: third connecting surface
- 24: inner peripheral surface
- 241: first inner peripheral surface
- 242: second inner peripheral surface
- 243: connecting surface
- 25, 26: liquid supply manifold
- 25s, 26s: liquid supply slit
- 27, 28: liquid drainage manifold
- 27s, 28s: liquid drainage slit
- 29: sealing groove
- 31: first corner portion
- 32: second corner portion
- 35: cut-out surface
- 4: protruding portion
- 5: bipolar plate
- 51: thin portion
- 6 RF: battery system (redox flow battery system)
- 7: battery cell
- 7P: positive cell
- 7N: negative cell
- 71: membrane
- 72: positive electrode
- 73: negative electrode
- 75: sealing member
- 8: circulation mechanism
- 8P: positive electrolyte circulation mechanism
- 8N: negative electrolyte circulation mechanism
- 82: positive electrolyte tank
- 83: negative electrolyte tank
- 84, 85: supply pipe
- 86, 87: drainage pipe
- 88, 89: pump
- 9: cell stack
- 9S: substack
- 91: supply/drainage plate
- 92: end plate
- 93: fastening mechanism
- 100: alternating current/direct current converter
- 110: power generation unit
- 120: transformer facility
- 130: load
- T2: maximum thickness
- W1, W2: width
- H3: distance
- H4: distance
- α1: interior angle
- β1: inclination angle
- P1: first point
- P2: second point
- P3: third point
- P4: fourth point

## Claims

1. A frame body used in a cell frame of a battery cell, the frame body comprising:
a first surface, a second surface, the second surface being a surface opposite to the first surface, an outer peripheral surface, and an inner peripheral surface,
wherein the outer peripheral surface includes
a first outer peripheral surface continuous with the first surface via a first corner portion,
a second outer peripheral surface continuous with the second surface via a second corner portion, and
a connecting surface connecting the first outer peripheral surface and the second outer peripheral surface,
the connecting surface has a first connecting surface continuous with the first outer peripheral surface, and
an interior angle formed by the first connecting surface and the first outer peripheral surface is less than 180°.

2. The frame body according to claim 1, wherein the second outer peripheral surface is located farther from the inner peripheral surface than the first outer peripheral surface.

3. The frame body according to claim 1 or 2, wherein, in a cross section of the frame body orthogonal to the first surface and the first outer peripheral surface, on the connecting surface, a point located closest to the inner peripheral surface is a first point, a point located farthest from the inner peripheral surface is a second point, and
a distance between the first point and the second point is 1% or more of a maximum thickness of the frame body.

4. The frame body according to any one of claims 1 to 3, wherein a width of the second outer peripheral surface is smaller than a width of the first outer peripheral surface.

5. The frame body according to claim 4, wherein the width of the second outer peripheral surface is 5% to 20% of a maximum thickness of the frame body.

6. The frame body according to any one of claims 1 to 5, wherein the first outer peripheral surface is inclined so as to gradually approach the inner peripheral surface as the first outer peripheral surface extends from a point at which the first outer peripheral surface and the first connecting surface intersect toward the first surface.

7. The frame body according to any one of claims 1 to 6, wherein the first corner portion is rounded.

8. The frame body according to any one of claims 1 to 7, wherein the second corner portion is rounded.

9. The frame body according to any one of claims 1 to 8, wherein the first connecting surface is continuously provided over an entire periphery of the first outer peripheral surface.

10. The frame body according to any one of claims 1 to 9, further comprising:
a cut-out surface,
wherein the inner peripheral surface is continuous with the first surface via the cut-out surface and a corner portion.

11. A cell frame comprising:
the frame body according to any one of claims 1 to 10; and
a bipolar plate supported by the frame body.

12. A battery cell comprising:
the cell frame according to claim 11.

13. A cell stack comprising:
the battery cell according to claim 12.

14. A redox flow battery system comprising:
the battery cell according to claim 12 or the cell stack according to claim 13.
